# EUROPEAN PATENT APPLICATION

(11) **EP 4 250 198 A1**
(43) Date of publication of application: **27.09.2023**
(21) Application number: 22169150.4
(22) Date of filing: 21.04.2022
(51) Int. Cl.: G06Q 10/06, G06Q 10/10

(54) **TASK ASSIGNMENT IN AUTONOMOUS MOBILE DEVICES**

(30) Priority: 22.03.2022 US 202217700644
(71) Applicant: Rapyuta Robotics Co., Ltd., Tokyo 135-0023 (JP)
(72) Inventor: LI, Wen Zheng, Tokyo (JP)
(74) Representative: FRKelly

(57) **Abstract**

The disclosure generally relates to method and system for task assignment in autonomous mobile devices. The method may include associating a value to a task from a plurality of tasks assigned to an agent from a plurality of agents operating in an environment. The method may further includes evaluating the associated value to the task based on information received from the one or more agents and dynamically updating the evaluated value in response to the received information from the one or more agents to generate a new value to be associated with the task. The method further includes generating a task assignment plan for the agent based on the new value to be associated with the task, the assigned task is terminated based on the completion of the generated task assignment plan.

## Description

### TECHNICAL FIELD

The disclosure herein generally relates to autonomous mobile devices, more particularly, to task assignment in autonomous mobile devices.

### BACKGROUND

Robots or agents have been at the cornerstone of automating mechanical tasks. Currently robots are being used to automate tasks in almost every field, like, farming, warehouse automation, military, etc. While current robots are able to individually execute a simple plan, controlling complex plan execution requires multiple robots to collaborate with each other. There are several challenges for controlling robots that execute a plan in collaboration. For example, controlling plan execution by multiple robots require execution of several process-intensive tasks, such as determining task assignment to multiple robots, synchronizing task execution between robots, etc. Further due to fast changing environment during a collaborative activity the results of these process intensive tasks have to be determined at the shortest possible time as result for a particular process intensive task may become redundant after a particular time lapse.

### SUMMARY OF THE INVENTION

The invention relates to a computer implemented method for task assignment in autonomous mobile devices according to claim 1. The invention also relates to a system task assignment in autonomous mobile devices according to claim 11. The invention also relates to a computer-readable medium comprising instructions which, when executed by a computer, cause the computer to carry out the method of any one of claims 1 to 10.

The following is a brief summary of subject matter that is described in greater detail herein. This summary is not intended to be limiting as to the scope of the claims. These and other features of the invention will be more readily understood upon consideration of the attached drawings and of the following detailed description of those drawings of presently-preferred and other embodiments of the invention.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is a block diagram illustrating a computer-implemented system for task assignment in autonomous mobile devices, in accordance with some embodiments of the present disclosure.
FIG. 2 illustrates a flow diagram for task assignment in autonomous mobile devices, in accordance with some embodiments of the present disclosure.
FIG. 3 is an exemplary visualization of the resultant graph of the system architecture, in accordance with some embodiments of the present disclosure.
FIG. 4 is a flow diagram illustrating a method for task assignment in autonomous mobile devices, in accordance with some embodiments of the present disclosure.

### DETAILED DESCRIPTION OF EMBODIMENTS

Exemplary embodiments are described with reference to the accompanying drawings. In the figures, the leftmost digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. Reference throughout this specification to "one embodiment", "this embodiment" and similar phrases, means that a particular feature, structure, or characteristic described in connection with the embodiment is included in at least one of the one or more embodiments. Thus, the appearances of these phrases in various places throughout this specification are not necessarily referring to the same embodiment. Furthermore, the particular features, structures, or characteristics may be combined in any suitable manner in one or more embodiments. It is intended that the following detailed description be considered as exemplary only, with the true scope and spirit being indicated by the claims (when included in the specification).

Embodiments of techniques to integrate and optimize decentralized task assignment in autonomous mobile devices are described herein. In one embodiment, a plan is a sequence of tasks that are to be executed to achieve a particular goal or solve a particular problem or subproblems of the problem. A task is a portion of a plan. Executing a task solves one or more subproblems. Task or task assignment may be defined in multiple ways and nowhere should it be construed as restrictive. In one embodiment, a task may be a list of behaviors to be executed one after the other. It may be a structure that is used to formulate complex strategies or multiple sub tasks, like, steps needed to pick up a payload from a rack in a operating environment like a warehouse. When the number of robots and number of tasks is defined, the robots start to execute the task. In one embodiment, controlling the plan execution includes managing the entire lifecycle of plan execution including determining several plan execution values. For example, controlling the plan execution includes determining task allocation of different tasks within the plan to different autonomous mobile devices or sometimes referred herein as agents. These plan execution values may be determined at different stages of plan execution as well as in real-time based on a change in the environment or robot's condition. For example, change in priority and urgency of a task along the completion of an assignment. An assigned task may change its priority, based on change in one or more circumstances and thereby changing/updating the overall task assignment. In another example, an assigned task may be canceled or a task may be split into two or more sub-tasks. In another example, there may be a dispute or disagreement between two or more agents with respect to completion of a task. In such scenarios task assignment strategies may need to dynamically update and generate new strategies.

Typically, in a multi-robot system, the number of tasks is large and the information contained in the task points is complex. Multi-robot systems may also include a plurality of heterogeneous robots. In such cases, the calculation cost of the global search algorithm is exponentially increased, so that the global search algorithm is difficult to find the optimal solution of the task allocation problem within the specified time. Therefore, the global search algorithm is not suitable for solving the large-scale multi-agent dynamic task allocation problem. In large-scale systems, task allocation must meet real-time requirements, and tends to obtain solution within a specified time, which is not necessarily the optimal solution. Therefore, the method has important significance for the research of the multi-robot dynamic task allocation problem with time constraint. Most of the task allocation adopts a traditional auction algorithm, which is static in terms of tasks, and a one-time auction algorithm is adopted. However, in the case of a large number of task points and dynamic changes, the method fails to address multiple changes, scheduling changing of priorities and obtaining optimized solutions.

Various embodiments of the present disclosure provide system(s) and method(s) for integrating decentralized task assignment in autonomous mobile devices to overcome the above scenarios in an operating environment like a warehouse. In other words, the present disclosure proposes integrating decentralized task assignment in an autonomous mobile device system and method based on a bounty function. The bounty function may be a number that is assigned against a task. Each of the bounty functions associated with a node may be termed as a bid value. The bid value is associated with cost, for example, if a robot is scheduled to perform a task of traveling from source node (one node) to destination node (another node) via an edge, then measure of priority or urgency of a task is termed as bid value for traversing through the edge. The present method provides an optimization process of integrating decentralized task assignment in autonomous mobile devices using task assignment planner where information related to the task is shared amongst two or more systems/agents. The present disclosure provides a system and method to dynamically solve large task assignment problems in distributed manner, based on transactional auction economics where each agent optimizes the assigned task as well as cooperate and coordinate by sharing information about cost evaluations to converge on assignment solutions. Also, the optimization process eliminates deadlock situations and/or dispute resolution, by dynamically and continuously broadcasting information related to bid value.

Embodiments of the present disclosure provide a decentralized architecture for integrating task assignment in autonomous mobile devices. The task assignment planner optimizes the task assignment by assigning a value associated for completion of a task, where the value may be a function, and such function may monotonically increase with time and may be greater than or equal to an existing lowest bid value. In addition, the task assignment planner also provides a function for change in the priority and urgency of task, bid value retraction, task splitting, dispute resolution and local bid combination search. The present disclosure also provides a method to make a change or bid at a time to their current basket of assignments, this stabilizes the cost evaluations of other agents that depend on the existing bids of the current agent. For example, in a task assignment, each agent, from a plurality of agents, searches independently for local optimas in their own assignment combination space (i.e., combination space within the plurality of agents), however interacts by dynamically updating the cost evaluations via broadcasting bids, and coordinating and cooperating with each other into adjacent combinations when one agent outbids another agent.

It is understood that the present disclosure refers to various terms that are interchangeable and may be used in one or more embodiments interchangeably. For example, the term 'nodes' may be interchanged by 'junctions' or 'tree element' or 'graph element' without any change in the scope or implementation of the invention. Such interchange may not be considered limiting and such interchanges are considered within the scope of the invention. In one embodiment, it is understood that an autonomous vehicle may be referred to as a node in the operating environment, such that the autonomous vehicle may be one or more of parked at the node, waiting at the node, traveling via the node, stopped at the node, completed navigation at the node, etc. It is also understood that the terms 'route', 'route plan,' 'trajectory', 'travel plan', ' navigation plan,' etc. may indicate the same term and are used at different places as per the use case scenarios. It is understood that the execution of one or more process steps leads to an output which is a result of the execution of the process step.

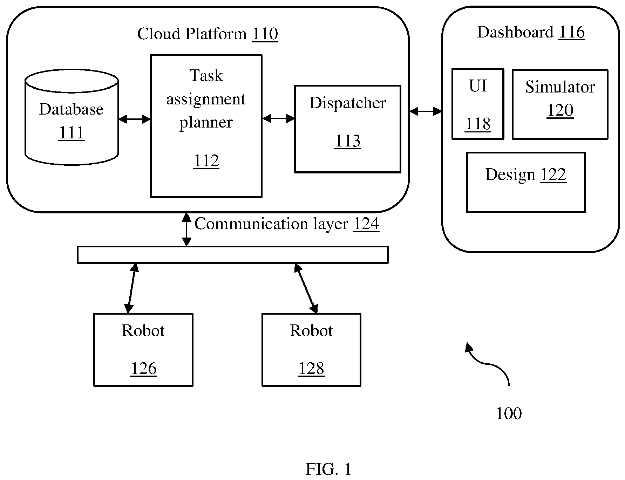

The technologies described herein are related to a robust cloud platform that optimizes task assignment in autonomous mobile devices. In an exemplary embodiment, the platform utilizes multiple data structures to represent the operating environment, generates route plans, and allows optimized movement of the devices from one node to another node. The platform provides various techniques for analyzing the task assignment plans for simple to complex scenarios, namely, like cyclic dependency between two or more robots or dispute resolution, multiple task assignment, retracting a bid value associated with a task based on circumstances. While analyzing one or more task assignment plans, the present system and method may apply heuristics, cost functions, metrics, etc. to identify new task assignment plans that may plan path iteratively and dynamically. In an exemplary embodiment, while analyzing the one or more task assignment plans, the present system and method may dynamically create or delete or update a bounty function (a bid value) based on the change in the urgency or priority of a task. In another example, a task can be decomposed into multiple sub tasks that may be performed independently with one or more interdependencies. In such cases each sub task is mapped on to individual bid value. In another example, the present method allows bid to be retracted in certain scenarios leading to suboptimal assignments. However, a penalty proportional to the bid value may be imposed and paid back into the auction, to discourage frequent retraction of bids and maintain stable price discovery among bidders. In an exemplary embodiment, the system or cloud platform may utilize one or more or combination of multiple techniques or data comprising speed scaling, up sampling, passive paths, parkable nodes, nonoverlapping nodes, priority metrics, time penalty, etc. for analyzing and optimizing the task assignment. The system may then distribute the optimized task assignment to one or more autonomous vehicles. A detailed description of the above-described system and method for task assignment in autonomous mobile devices is shown with respect to illustrations represented with reference to FIGS. 1 through 4.

Referring now to the drawings, and more particularly to FIGS. 1 through 4, where similar reference characters denote corresponding features consistently throughout the figures, there are shown preferred embodiments and these embodiments are described in the context of the following exemplary system and/or method.

FIG. 1 is a block diagram illustrating a computer-implemented system for task assignment in autonomous mobile devices, in accordance with some embodiments of the present disclosure. In one embodiment, the objective of system 100 is to provide system and method to dynamically optimize large task assignments in a distributed manner, based on transactional auction economics where each agent/robots from a plurality of agents may optimize for themselves (heuristic cost estimation) as well as cooperate by sharing information about cost evaluations and thereby converge on assignment solutions. The system 100 may comprise one or more processing devices and storage devices that include computer-readable instructions executed by processing devices for optimizing task assignment plans. The system 100 comprises a cloud platform 110 that may be considered on-demand availability of computer system resources with/without the user's direct active management. The cloud platform includes one or more processors and memory to generate and store the task assignment plans or trajectories. In one embodiment, the cloud platform 110 includes a database 111 for storing the task assignment, route plans associated with the task assignment, trajectories and related data for generating the task assignment plans, as discussed herewith. In one embodiment, the related data may be a device's state information, statistics, other information related to navigation, traversing trees or graphs, preconditions, route tables, etc. The cloud platform 110 includes a task assignment planner 112, which includes one or more processors and memory to perform the primary function related to optimizing task assignment and dynamically optimize large task assignment in distributed manner. In one embodiment, the task assignment planner 112 may act as a server, a system, an equivalent device, software, or a hardware component, for performing various functions related to task assignment to a plurality of autonomous mobile devices. In one embodiment, the task assignment planner 112 may be a leader autonomous mobile device in a pool of heterogeneous autonomous mobile devices.

In one embodiment, the task assignment planner 112 has been shown as a module of cloud platform 110 for representation and simplicity purposes. However, task assignment planner 112 may act as a component of any other system or platform involved in the functions related to task assignment planning. The cloud platform 110 includes a dispatcher 113 whose primary function is task assignment and decides which autonomous mobile device should perform specific tasks and at a particular time based on the information broadcasted by other neighboring autonomous mobile devices. The dispatcher module communicates details related to the task on the communications layer 124 to one or more autonomous mobile devices that know the destination and the task to be performed at the given time. The autonomous mobile device is then programmed to interact with the task assignment planner 112, via the communications layer 124. The system 100 also includes a dashboard 116 that may be used for receiving inputs, like obstacle maps, graphs, tree structures, any other relevant inputs, and for displaying maps, representations like graphs, trees, simulated environments, etc. The dashboard 116 may include UI 118, simulator 120, and a design 122 for various functions related to multi-robot task assignment planning and other tasks related to autonomous mobile device functions, like instructing the autonomous mobile device to move from one location to another on a map or a UI, etc. The UI 118 may be used to receive obstacle maps or other inputs related to task assignment planning. Simulator 120 provides a simulation environment that includes a map to represent the autonomous devices' navigation path in an operating environment. The system 100 supports heterogeneous autonomous mobile devices like a plurality of robots for example, robot 126 and robot 128.

Described herein are various technologies pertaining task assignment in a plurality of autonomous mobile devices. The system comprises a cloud platform that includes a task assignment planner. The task assignment planner comprises one or more components related to an operating environment, like a warehouse, construction site, or a hospital. In one embodiment, the nodes may be considered as regions of space in the operating environment. The task assignment comprises multiple modules that assign one or more tasks as a best estimate or based on the requirement. The modules may analyze one or more task assignments for critical decisionmaking scenarios, for example, mapping a task to multiple sub-tasks. After the modules analyze the task assignment plans, the system utilizes the task assignment planner to optimize tasks distribution based on the analysis. The optimized tasks are distributed to one or more autonomous vehicles.

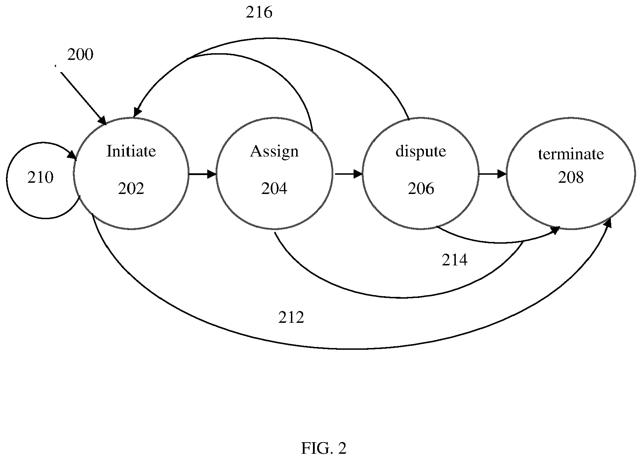

The operating environment may include a warehouse, hospitals, construction sites, offices, dockyards, shipyards, roads, rails, etc. The simulator 122 may also be used to instruct the autonomous devices to perform certain processes to optimize and integrate the task assignment among the plurality of agents. One of the instructions may include providing priorities or parameters that may impact one's agent's task over another agent. The design 122 may provide a design environment to edit the inputs, like obstacle maps and provide customized status information, for example, inputs like the potential for dynamic collisions at a particular time, for example, the arrival of certain autonomous devices, like driverless cars, at a traffic junction at a particular time or day based on traffic conditions at the particular time or day. The inputs or instructions may be provided by any component of dashboard 116 or other components of system 100, for example, warehouse management system or control system. In one embodiment, a warehouse management system or control system may be configured to interface with components of cloud Platform 100 for coordinating with autonomous devices and generating task assignment scenarios. The coupling of various external or internal components may be via or communications layer 124 or by any other non-limiting means of communications. The communications layer 124 may be customized to allow customers or other stakeholders to integrate their robotics software or hardware for customized robotics solutions. One or more functionalities of the system 100 and components thereof, is further explained in detail with respect to FIGS. 2 -4.

FIG. 2 illustrates a flow diagram for task assignment in autonomous mobile devices, in accordance with some embodiments of the present disclosure. In one embodiment, an architecture of the task assignment planner may include process steps to self-design by an agent and terminate an assigned task to completion. A primary function 200 is created by a user based on an application or a function related to tasks in an operating environment. The primary function, also referred herein as bounty function is a predetermined base price based on a function which monotonically increases with time and is greater than or equal to a lowest bid amongst the plurality of agents. In one embodiment, an agent may propose a value or a bid based on the determined primary function i.e., the bounty function or base price and initiates the auction 202. In other words, when the bid is lowest than the base price then the bounty function is considered to be assigned 204. The term auction may be used to refer to a value or a bid value associated with the task. In a typical scenario, once a bid is initiated it is expected to complete the task. In this example, the process of completion of a task is monitored by the agent, who places the auction associated with the task, referred herein as, the owner of the assigned auction. The agreed price is paid out once completion of the initiated task is confirmed.

The assigned value corresponding to the agent associated with the task may enter a dispute 206 with one or more agents in the operating environment. In one embodiment, the owner of the auction is required to make a deposit amount in addition to the bounty function at the creation of the auction. For each bid made by the auction owner requires a deposit of the same amount from the other bidders, which is returned when said bid value gets outbid. This ensures that when the auction is assigned, both the owner and the assigned bidder have a deposit in stake until the completion of the assigned task. When a dispute occurs and a decision is made, the deposit of the winner of the dispute is returned, and the deposit of the loser is paid to an assigned arbitrator of the task assignment plan. In the event that the arbitrator is unresponsive, either the owner or the bidder can forfeit the dispute by losing their deposit to the other party. This ensures the process cannot be stalled by any one party. Either way a dispute may be resolved and the task may be terminated 208 either by completion of the task or termination of the task without completion. As described further the initiated auction may be retracted whilst compensating for the retraction. The process of the auction is based on a heuristic cost estimation of the agent corresponding to the plurality of tasks assigned to the agent. The process dynamically optimizes large task assignments in a distributed manner, based on transactional auction economics where each agent/robots from a plurality of agents may optimize for themselves by cooperating and coordinating information related to cost evaluations with one or more agents in the operating environment.

The present disclosure further provides a time-based task priorities, for example, many tasks do not need to be assigned and completed immediately but have a certain hard or soft deadline in the future, this may be modeled with a bounty function that increases with urgency. As shown in FIG. 2, at 210, as circumstances change so do the priority and urgency of a task changes and based on the changes the owner of the auction may retract the bid and propose a new bid value. In such cases the bounty function of the auction may be updated by the owner of the auction, for example, to increase the bid if the task suddenly becomes more urgent. Alternatively, the agent can delay time or stretch the bounty function in the time axis if the task becomes deprioritized. In another variation, a bidder (other neighboring agents to make offers with a higher price than the current bounty prompting the owner to accept by raising it to match). The bid proposed by the agent (referred as the bidder) is continuously evaluated and re-evaluated during the process of the auction. However, in absence of a centralized system, like the present system, there may be scenarios, the auction may not be accounted for. For example, a bidder may claim a task is complete while knowing otherwise, or vice versa the owner claiming a task is incomplete when otherwise. In such cases, disputes escalate to a third-party authority specified at the creation of the auction. However, the design for the distributed system is such that central authority is invoked as little as possible, and this is achieved through penalties that discourage such false claims and incentivize local resolution.

There may be situations where a bid is retracted 216, after initiation at 202 or at dispute 206. For example, in task assignments, bidders include a set of tasks as opposed to just one. In such an example, evaluation of the bid value for each of the individual tasks is complex, since each of the individual tasks is associated or linked to other individual tasks in the set of tasks. For example, a bid is made for task 1 in anticipation of also winning the bid for task 2. However, at some point in time, task 2 may be beyond the bid limit of the agent, in such cases task 1 is re-evaluated. Therefore, when the current plan changes, for example, scenarios lead to suboptimal assignments the bid may be retracted in the process of task assignment plan. However, when a bid is retracted, to discourage frequent retraction of bids and maintain stable price discovery among bidders, a penalty proportional to the bid value is imposed and paid back into the auction. This process facilitates flexible but bounded auction duration. As long as a single bid exists, the auction will eventually terminate, however, the auction will terminate faster (in turn the task gets completed faster) if the lowest bid is closer to the current bounty value.

The present system provides an advantageous system and method for time sensitive assignments where less time is spent if the current offer is good enough for completion of the assigned task. In one embodiment, the present system and method retains the benefits of traditional open-outcry first-price auctions, namely facilitation of open competition and price discovery, allowing each of the bidding agents to independently optimize based on one or more agents' valuations of tasks. This facilitates the bidding agents to instantly win the auction if desired by bidding lower than the current base price. This also bypasses the system overhead of back-and-forth exchanges of bids in scenarios where the assignment is time sensitive on the bidder side. Embodiments of the present disclosure also provide one or more conditions to process the task assignment plan, namely, the final value of the bounty function created for a task cannot be lower than the previously created bounty function. The condition approximates withdrawal of funds from the auction's bounty, to uphold the value expectations for bidders of existing bids. In one embodiment, the owner of an auction may withdraw (212 or 214) or cancel the bid if the task is no longer required. In case of withdrawal or cancellation of a bid, the present system provides a penalty for such withdrawal or cancellation from the owner of the auction, that is from the initiator of the bid. Having a penalty may discourage frequent withdrawal and cancellation of the initiated auction. In a distributed architecture for task assignment solution, information associated with each of the agents participating in the bidding process is important to determine the overall task assignment and to generate a task assignment plan, that is the task associated with neighboring agents is a factor considered while deciding a task assignment for a particular agent.

In one embodiment, a task from the plurality of tasks may be split into a plurality of sub tasks that may be performed independently with few interdependencies. For the plurality of sub tasks, each task may be mapped to its own individual auction. In one variation, each of the sub tasks may not be captured as a part of the original main task and the value of the main task is tied to completion of each sub task from the plurality of sub tasks. It may be a complex situation to specify a bounty function for each individual sub task in isolation, hence the plurality of tasks is tied or mapped to the main task associated with one bounty function . In another variation, the main task may be completed partially, that is only a portion of the completed task that is auctioned for is completed. Also, completion of such tasks may involve combined efforts of multiple bidders each completing a different part of the task. The present disclosure provides a system and a method for task splitting. In task splitting a plurality of sub tasks within a main task associated with an auction has a user provided combined value function. The initiated auction for such tasks considers a specific combination as an input of tasks and outputs the value of the combination, meaning, portions of the main tasks are split into plurality of sub tasks based on combined value function. For example, bulk preference for completion of all tasks in one bid can be specified with a combination value function that returns a higher value the larger the combination. For example, an agent may bid for any combination of subtasks within an auction. Each bid is then scaled by the combination value before being processed, allowing bids for different combinations of sub tasks to be compared linearly. The main bounty function remains the same except instead of comparing against single bid values, the auction is compared against the defined combination values. Once an auction is assigned, completed and paid out, the completed subtasks may be removed from the remaining auction along with the remaining bounty function scaled down proportional to the amount that was paid out previously. The process of removal repeats until all the subtasks are completed.

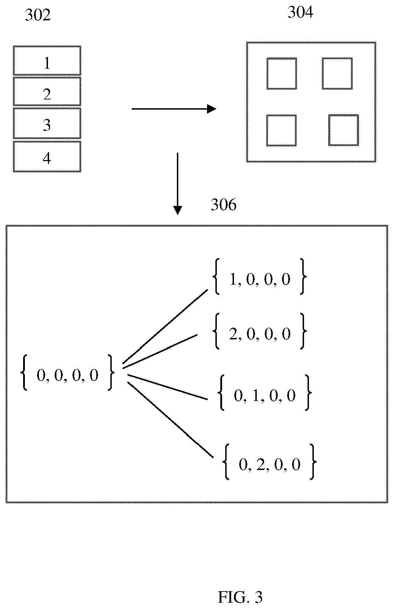

Embodiments of the present system include a decentralized distributed system. The present system is designed to self-optimize strategies as a baseline as opposed to seeking control of individual agents aside from providing infrastructure and incentive schemes. In other words, if a bidding agent performs one task at a time, the value of the bid is maximized by comparing the value against all the existing task auctions by one or more agents and evaluate each auction bid based on current price rewarded and subtracted by the cost it would take to complete the specified task. The goal is to propose a bid to the auction with the highest net value, meaning, a bid value priced at as much as the bidding agent is proposing to pay before the second-best option becomes more suitable for the agent. For example, any bid value better than the current bid value would suffice, but bidding the highest price may allow assignments to converge faster. As described in the preceding paragraphs, a task may be split into multiple sub tasks. In multi sub tasks scenario, the bidding agent participates in a combination of auctions simultaneously. The combination of auctions may be complicated due to the number of evaluations and reevaluates to be performed. Therefore, in such a complex situation, a local search combination is performed. In the first step of the local search combination, a search space of possible combinations of task assignments as a graph is defined where every node is of specific combination based on the number of assigned tasks. Edges between two nodes for two combinations may differ by a single item. For example, the combination of nothing assigned is connected to the combination of task A assigned because they differ by one assignment, in general each edge represents one event that may take place at a single auction, such as placing a winning bid, being outbid, retracting a bid, etc. The specific combination based on the number of assigned task is further described in detail with respect to FIG. 3.

FIG. 3 is an exemplary visualization of the resultant graph of the system architecture, in accordance with some embodiments of the present disclosure. As shown in FIG. 3, each agent is assigned a plurality of tasks, for example, task 1, task 2, task 3 and task 4....task n 302. And each agent also includes a bundle of slots, for example, slot 1, slot 2, slot 3 and slot 4 304 for each tasks from the assigned plurality of tasks. In an example, the limit for an agent, herein agent 1, may include four slots of tasks to be accommodated or performed. Each task assigned to an agent may include one or more criterions and based on the criterion, the agent may organize the bundle of slots. For example, the one or more criterion may include a weight limit or a shape limit, meaning, only a certain weight limit item may fit in some robots or certain shapes designed to be picked up by the robot etc. The one or more criteria may determine how to bundle the tasks while coordinating with the other agents. Based on the determined bundle of slots, a cost is estimated for each of the tasks. For example, the cost estimate for task 1 is determined based on how far a robot is needed to travel to get the assigned task done in terms of distance. In one embodiment, the cost estimate may include the sum of how much it costs to do the task, minus how much the agent gets paid is the net cost of the completed task. The one with min net cost is what an agent aims to bid. However, if anything changes with respect to the neighboring agent who is a part of the bidding process, then a bid is changed based on the circumstantial changes. As shown in 306, the four tasks are represented by the four nodes. The first bid is placed for task 1 based on the cost estimation of the agent. And then if there are any circumstantial changes, then the bid is changed to task 2 and prioritized over others. In another variation, the bid may be placed for task 1 in slot 2. Likewise, task 2 is moved to slot 2, once task 1 is changed based on other circumstantial changes. In general, when a bid is placed for a task, then it is broadcasted to the neighboring agents who are a part of the bidding process. Based on the placed bid, the agent traverses to the node with a single hop. Since the agents are interdependent on each other, only a single hop is allowed at a time thereby forcing the agents not to change the plan too frequently. The local search combination within the four nodes allows for completion of each task with self-optimizing of the agent based on the heuristic cost estimation. The heuristic cost estimation is based on iteratively minimizing the cost, cost optimization and price discovery. Each of the agents receives a navigation map from the route planner of the system (not shown in the FIG), to estimate the distance to traverse from one node to another to complete a task. Each agent may change or update the proposed bid based on the received data from other agents and the navigation map. For example, when an agent may be bidding for task 1 (node occupying slot 1 in FIG. 3), since task 1 is lowest or optimal estimation for the agent. However, the situation may change based on the updated data (for example, task 1 may no longer be the lowest bid), then the agent may be bidding for task 2 instead of task 1 in slot 1. From task 2, the agent may go back to no task assigned in slot 1. Then again, with dynamically changing estimation, with a single hop from slot 1 to slot 2, agents may again bid for task 1 or task 2. The single hop ensures dynamic traversal of the combination graph (306 shown in FIG. 3) and forces other agents to traverse to another node. The combination search is advantageous where there are hundreds of tasks assigned and the heuristic cost estimation applied by searching for what combination of tasks to explore (what tasks to bundle).

Embodiments of the present disclosure provide a system and a method for local search of current combinations. The local search combination of nodes assesses the value of each of the immediately connected node to determine a single auction and cost estimation of the bid. The present system tracks the assignments in the current combination for an outbid against the current bid value. Based on the outbid, the auction is transitioned to another node which outbid the current bid. The outbid node is termed as the resultant combination for any further local search combination. The aforementioned steps are repeated dynamically and continuously to take the highest value auction to influence the current assignment combination, and stop once the value of the current node is higher than all the neighbor nodes. The present system and method have the advantage of constraining agents to make one change or bid at a time to their current bundle of assignments. The single change or bid stabilizes the cost evaluations of other agents that depend on the existing bids of the current agent. In general, every agent independently searches for local optimas in their own assignment combination space, but interacts dynamically and updates the cost evaluations via broadcasting bids, and bumping each other into adjacent combinations when one agent outbids another agent.

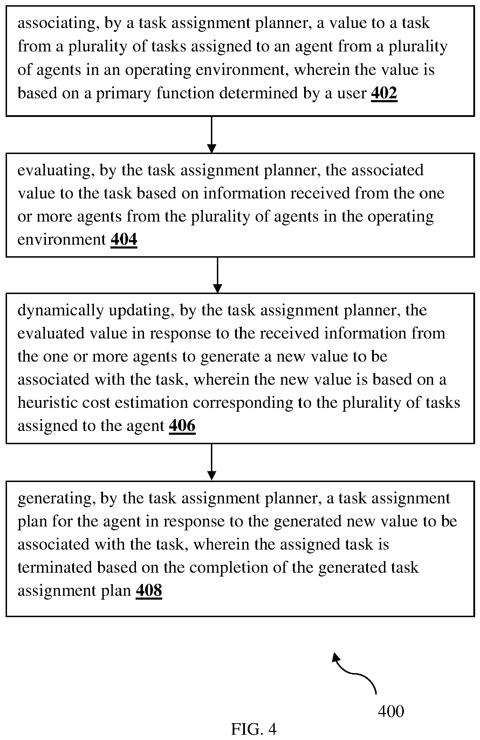

FIG. 4, illustrates a flow-diagram of a method 400 for task assignment in autonomous mobile devices, in accordance to some embodiments of present disclosure. The method 400 may be described in the general context of computer executable instructions. Generally, computer executable instructions can include routines, programs, objects, components, data structures, procedures, modules, functions, etc., that perform particular functions or implement particular abstract data types. The method 400 may also be practiced in a distributed computing environment where functions are performed by remote processing devices that are linked through a communication network. The order in which the method 400 is described is not intended to be construed as a limitation, and any number of the described method blocks can be combined in any order to implement the method 400, or an alternative method. Furthermore, the method 400 can be implemented in any suitable hardware, software, firmware, or combination thereof. In an embodiment, the method 400 depicted in the flow chart may be executed by a system, for example, the system 100 of FIG. 1. The method 400 of FIG. 4 will be explained in more detail below with reference to FIGS. 1-3.

Referring to FIG. 4, in the illustrated embodiment, the method 400 is initiated at 402 where the method includes associating a value to a task from a plurality of tasks assigned to an agent from a plurality of agents operating in an environment. The associated value is based on a primary function determined by a user based on an application. In one embodiment, an agent may propose a value or a bid based on the determined primary function i.e., the bounty function or base price and initiate the auction. In other words, when the bid is lowest than the base price then the bounty function is considered to be assigned. The term auction may be used to refer to a value or a bid value associated with the task. The primary function is a base price or base value predetermined based on a function which monotonically increases with time and is greater than or equal to a lowest bid amongst the plurality of agents. In general, once a bid is initiated it is expected to complete the task. The process of completion of a task is monitored by the agent, who places the auction associated with the task, referred herein as, the owner of the assigned auction. The agreed price is paid out once completion of the initiated task is confirmed. In one embodiment, the proposed value to be associated with the task is lower than the primary function determined by the user. The proposed value is considered to be assigned when the proposed value is less than the predetermined base price. In another embodiment, an agent may propose a value higher than the predetermined base price. In another embodiment, an agent may change the predetermined base price depending on an application, urgency of the task, prioritization of the task, time-sensitive task or one or more circumstantial changes during the auction. In another embodiment, the agent may propose an update value higher than the primary function or change the primary function based on the one or more circumstantial changes. The flexibility allows changing the course of action depending on the priority at the same time bounded by the course of action of the one or more agents in the operating environment.

At 404, the method includes evaluating the associated value to the task based on information received from the one or more agents from the plurality of agents operating in an environment. The process of evaluation includes optimizing the assigned task in a distributed manner by broadcasting the cost estimation information of the agent with one or more neighboring agents. The agent may self-optimize the task assignment by cooperating and coordinating information related to cost evaluations, proposed value, change in priority etc. in the operating environment. The information received from the one or more agents may include one or more of a value proposed for a task, distance required to traverse to complete the task, status of the task, navigation map of the operating environment and a route plan. The information determines the change in the proposed value to another value, again determined by the continuous information received by the one or more agents.

At 406, the method includes dynamically updating the evaluated value in response to the received information to generate a new value to be associated with the task. The new value is based on a heuristic cost estimation of the agent corresponding to the plurality of tasks assigned to the agent. The method of dynamically updating the evaluated value in response to the received information from the one or more agents is a continuous process until the self-optimizes result is obtained. The self-optimization herein refers to an agent's task optimization depending on a net value required to complete a task. The agent determines an optimized value to propose based on the information related to the neighboring one or more agents proposing a value for the same task. Also, the new value herein may be a first value or a second value or a third value or so on and so forth depending the number of times the proposed value is evaluated/re-evaluated. Further, the optimization is based a heuristic cost estimation including one or more factors. The one or more factors include proposing a value to be associated with a task based on the determined primary function and evaluating the proposed value to be associated with the task in reference to a value proposed by the one or more agents to be associated with one or more tasks assigned to each of the one or more agents in the operating environment. In other words, the goal of the present method is to propose a bid to the auction with the highest net value, meaning, a bid value priced at as much as the bidding agent is proposing to pay before the second-best option becomes more suitable for the agent. For example, any bid value better than the current bid value would suffice, but bidding the highest price may allow assignments to converge faster.

At 408, the method includes generating a task assignment plan for the agent based on the new value to be associated with the task. The assigned task is terminated based on the completion of the generated task assignment plan. As shown in FIG. 2, the assigned task is terminated when the assigned task is completed by confirming the associated value by the agent. In other words, when the proposed value is satisfied and agreed upon, such value is confirmed by the agent so that the task is completed. In case of multiple sub-tasks, each of the sub-task's completion is tied to the overall completion of the main task. There may be scenarios of partial completion of a task, in such cases, only partially agreed value is confirmed, until the task is completely terminated.

In one embodiment, present disclosure provides a method for resolving a dispute between the agent associating the value and an agent proposing a value to be associated with a task. In one variation the dispute may be resolved by arbitrating the dispute via an arbitrator by confirming the associated value by the agent to completion of the task. The arbitrator is assigned at the creation of the primary function in which the arbitrator determines the outcome of the dispute based on the associated value of one agent and the proposed value of another and who gets to go ahead with the task. For example, after the auction is considered to be assigned, the bidder is expected to complete the task. Also, owner of the assigned auction is expected to monitor the completion status and payout the agreed price once completion is confirmed. In a decentralized architecture where each agent is self-optimizing and self-discovering without a central authority, it is possible to generate a false statement with respect to completion of a task. For example, a bidding agent may claim that a task is complete while knowing otherwise, or vice versa the owner may claim a task is incomplete when otherwise. Such disputes is resolved through penalties that discourage false statement and incentivize local resolution. In this system, the owner is required to make a deposit amount in addition to the bounty at the creation of the auction. Each bid also requires a deposit of the same amount from the bidder, which will then be returned when it gets outbid. This ensures that when the auction is assigned, both the owner and the assigned bidder have a deposit in stake. When a dispute occurs and a verdict is made, the deposit of the winner is returned, and the deposit of the loser is paid to the arbitrator account. In the event that the arbitrator is unresponsive, either the owner or the bidder can forfeit the dispute by losing the deposit to the other party. This ensures the process cannot be stalled by any one party.

In one embodiment, present disclosure provides a local search space for probable combination of the assigned task. The local search space is provided by defining a search space for a probable combinations of two or more tasks assigned to the agent. The search space for the probable combinations of two or more tasks is based on a current combination of the two or more tasks. The current combination includes grouping of the two or more tasks assigned to the agent and updating the search space for the probable combinations of two or more tasks assigned to the agent based on a value proposed by the agent corresponding to each of the two or more tasks. The local search combination is represented by nodes corresponding to each assigned task (as shown in FIG. 3). Each node assesses value of each of the immediately connected node to determine a single auction and cost estimation of the bid proposed by the agent. The present system tracks the assignments in the current combination for an outbid against the current bid value. Based on the outbid, the auction is transitioned to another node which outbid the current bid. The outbid node is termed as the resultant combination for any further local search combination. The aforementioned steps are repeated dynamically and continuously to take the highest value auction to influence the current assignment combination, and stop once the value of the current node is higher than all the neighbor nodes. The present system and method have the advantage of constraining agents to make one change or bid at a time to their current bundle of assignments. The single change or bid stabilizes the cost evaluations of other agents that depend on the existing bids of the current agent. In general, every agent independently searches for local optimas in their own assignment combination space, but interacts dynamically and updates the cost evaluations via broadcasting bids, and bumping each other into adjacent combinations when one agent outbids another agent.

In various embodiments of FIGS. 1-4, a method and system for task assignment in autonomous mobile devices is disclosed. The present disclosures solve technical problems in the field related to task assignment in autonomous mobile devices. The various embodiments described herein implement steps to dynamically solve large task assignment problems in distributed manner, based on transactional auction economics where each agent can optimize for themselves while sharing information about cost evaluations to converge on assignment solutions. The present system and method include solutions to accept offers from other agents, counter-offer a value proposed by other agents, change or propose a value higher than the determined primary function such that the assigned task is completed. The present system and method also facilitate canceling bids or withdrawal of bids whilst proposing penalties for such cancellation or withdrawal. The present system and method also provide combination graphs representing a bundle of tasks for local bid combination search via a heuristic cost estimation.

Further, the various embodiments described herein provides a way to specify flexible time-based task priorities by creating a bounty function that increases with urgency. This also allows for flexible and bounded auction duration. The time-based task priorities are advantageous in time sensitive assignments where less time is spent for if a current proposed value is good enough for completion of the task. The present system facilitates open competition and price discovery, allowing bidding (proposing a value) agent to independently optimize based on valuation of the tasks assigned to the agent and the valuation of tasks assigned to one or more neighboring agents. The present system also facilitates bidding a value lower than a current bounty price and thereby bypasses the system overhead of back-and-forth exchanges of bids in scenarios where the assignment is time sensitive. The present system is designed to best suit self-optimizing strategies as a baseline. This approach has the advantage of constraining agents to make one change or bid at a time to their current bundle of assignments, thereby stabilizing the cost evaluations of one or more agents that depend on the existing bids of the current agent. Each agent interacts by dynamically updating the cost evaluations.

The foregoing diagrams represent logical architectures for describing processes according to some embodiments, and actual implementations may include one or more components arranged in other manners. Other topologies may be used in conjunction with other embodiments. Moreover, each component or device described herein may be implemented by any number of devices in communication via any number of other public and/or private networks. Two or more of such computing devices may be located remotely from one another and may communicate with one another via any known manner of protocol(s) and/or a dedicated connection. Each component or device may comprise any number of hardware and/or software elements suitable to provide the functions described herein as well as any other functions. For example, any computing device used in an implementation of a system according to some embodiments may include a processor to execute program code such that the computing device operates as described herein.

Any combination of one or more computer readable media may be utilized. The computer readable media may be a computer readable signal medium or a computer readable storage medium. A computer readable storage medium may be, for example, but not limited to, an electronic, magnetic, optical, electromagnetic, or semiconductor system, apparatus, or device, or any suitable combination of the foregoing. More specific examples (a non-exhaustive list) of the computer readable storage medium would include the following: a portable computer diskette, a hard disk, a random-access memory (RAM), a read-only memory (ROM), an erasable programmable read-only memory (EPROM or Flash memory), an appropriate optical fiber with a repeater, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium that can communicate, propagate, or transport a program for use by or in connection with an instruction execution system, apparatus, or device. Program code embodied on a computer readable signal medium may be transmitted using any appropriate medium, including but not limited to wireless, wireline, optical fiber cable, RF, or any suitable combination of the foregoing.

Computer program code for carrying out operations for aspects of the present disclosure may be written in any combination of one or more programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS), Platform as a Service (PaaS) or Infrastructure as a Service (IaaS) or Robotics as a Service (RaaS) or Warehouse as a Service (WaaS) or Collaborative robots (cobots) as a Service or other service models.

Aspects of the present disclosure are described herein with reference to flowchart illustrations and/or block diagrams of methods, apparatuses (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

These computer program instructions may also be stored in a computer readable medium that when executed can direct a computer, other programmable data processing apparatus, or other devices to function in a particular manner, such that the instructions when stored in the computer readable medium produce an article of manufacture including instructions which when executed, cause a computer to implement the function/act specified in the flowchart and/or block diagram block or blocks. The computer program instructions may also be loaded onto a computer, other programmable instruction execution apparatus, or other devices to cause a series of operational steps to be performed on the computer, other programmable apparatuses or other devices to produce a computer implemented process such that the instructions which execute on the computer or other programmable apparatus provide processes for implementing the functions/acts specified in the flowchart and/or block diagram block or blocks.

As will be appreciated by one skilled in the art, aspects of the present disclosure may be illustrated and described herein in any of a number of patentable classes or contexts including any new and useful process, machine, manufacture, or composition of matter, or any new and useful improvement thereof. Accordingly, aspects of the present disclosure may be implemented as entirely hardware, entirely software (including firmware, resident software, micro-code, or other suitable types of software) or combining software and hardware implementation that may all generally be referred to herein as a "circuit," "module," "component," or "system" or "platform" or "apparatus.". Furthermore, aspects of the present disclosure may take the form of a computer program product embodied in one or more computer readable media (e.g., tangible, non-transitory computer readable media) having computer readable program code embodied thereon. The present disclosure refers to terms like 'users', 'developers', 'designer', 'third parties', 'warehouse owner', 'robotics solutions provider' etc. and are used in several or specific embodiments, however, the terms are not restricted to those specific embodiments and can be replaced by other term(s) as the invention is not restricted or limited by these terms.

A device is an object or a physical entity having a unique identifier and an ability to transfer data over the internet. In one embodiment, the device is a 'thing' in the Internet of Things (loT). A thing, in the IoT context, refers to an entity or physical object that has a unique identifier, an embedded system, and the ability to transfer data over a network. These devices may include physical devices, home appliances, vehicles, edge devices, fog devices, etc. The device also includes robots that can perform actuation and sensing along with other device functionalities.

In an implementation, one or more of the method(s) described herein may be implemented at least in part as instructions embodied in a non-transitory computer-readable medium and executable by one or more computing devices. In general, a processor (for example a microprocessor) receives instructions, from a non-transitory computer-readable medium, for example, a memory, and executes those instructions, thereby performing one or more method(s), including one or more of the method(s) described herein. Such instructions may be stored and/or transmitted using any of a variety of known computer-readable media.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer-readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims (when included in the specification), the singular forms "a," "an," and "the" include plural references unless the context clearly dictates otherwise.

It is intended that the disclosure and examples be considered as exemplary only, those in the art will recognize other embodiments may be practiced with modifications and alterations to that described above.

## Claims

1. A processor-implemented method comprising:
associating, by a task assignment planner, a value to a task from a plurality of tasks assigned to an agent from a plurality of agents in an operating environment, wherein the value is based on a primary function determined by a user;
evaluating, by the task assignment planner, the associated value to the task based on information received from the one or more agents from the plurality of agents in the operating environment;
dynamically updating, by the task assignment planner, the evaluated value in response to the received information from the one or more agents to generate a new value to be associated with the task, wherein the new value is based on a heuristic cost estimation corresponding to the plurality of tasks assigned to the agent; and
generating, by the task assignment planner, a task assignment plan for the agent in response to the generated new value to be associated with the task, wherein the assigned task is terminated based on the completion of the generated task assignment plan.

2. The method of claim 1, further comprising:
determining the primary function by the user based on an application, wherein the primary function comprises a base value corresponding to a task; and
proposing a value to be associated with a task from the plurality of tasks assigned to the agent corresponding to the determined primary function.

3. The method of claim 2, wherein the proposed value to be associated with the task is lower than the primary function determined by the user.

4. The method of claim 1, wherein the value associated with the task is updated based on change in priority of the task from the plurality of tasks assigned to the agent.

5. The method of claim 1, wherein the heuristic cost estimation comprises:
proposing a value to be associated with a task in reference to the determined primary function and;
evaluating the proposed value to be associated with the task in reference to a previously proposed value by the one or more agents to be associated with one or more tasks assigned to each of the one or more agents in the operating environment.

6. The method of claim 1, wherein the new value is lower or higher than the primary function determined by the user.

7. The method of claim 1, further comprising:
resolving a dispute, by the task assignment planner, between the agent associating the value and an agent proposing a value to be associated with a task, wherein resolving the dispute comprises:
arbitrating the dispute via an arbitrator, wherein the arbitrator is defined by the user at the determination of the primary function, wherein the arbitrator determines outcome of the dispute based on the associated value and the proposed value; or
confirming the associated value by the agent for completion of the task such that the agent associating the value terminates the assigned task to completion.

8. The method of claim 1, further comprising:
retracting, by task assignment planner, the proposed value or the associated value based on one or more changes associated with the agent or in response to information received by the one or more agents, wherein the one or more changes comprises change in priority of the assigned task.

9. The method of claim 8, wherein retracting the proposed value includes a penalty value, wherein the penalty value is added to the determined primary function.

10. The method of claim 1, further comprising:
defining, by the task assignment planner, a search space for a probable combinations of two or more tasks assigned to the agent, wherein the search space for the probable combinations of two or more tasks is based on a current combination of the two or more tasks, wherein the current combination comprises grouping of the two or more tasks assigned to the agent; and
updating, by the task assignment planner, the search space for the probable combinations of two or more tasks assigned to the agent based on a value proposed by the agent corresponding to the two or more tasks.

11. The method of claim 10, further comprising:
repeating the step of updating until a proposed value of the task is higher than a value proposed by the two or more tasks assigned to the agent.

12. The method of claim 1, further comprising
splitting the task into a plurality of sub tasks, wherein each of sub-task of the plurality of sub tasks is associated with a value, wherein the associated value of each of the sub-task from the plurality of sub-tasks is linked to the value associated with the task, and

13. The method of claim 12, wherein terminating the task comprises completion of each of the sub-tasks.

14. A system comprising:
a memory storing instructions;
a processor coupled to the memory, wherein the processor is configured to perform the method of any one of claims 1 to 13.

15. One or more non-transitory machine-readable information storage mediums comprising one or more instructions which when executed by one or more hardware processors cause the computer to carry out the method of any one of claims 1 to 13.
